# EUROPÄISCHE PATENTSCHRIFT

(11) **EP 3 092 108 B1**
(45) Veröffentlichungstag und Bekanntmachung des Hinweises auf die Patenterteilung: **02.06.2021**
(21) Anmeldenummer: 15760499.2
(22) Anmeldetag: 15.09.2015
(51) Int. Cl.: B23Q 17/22, G01D 5/244, G01D 5/347, G01B 5/00, B23Q 11/00

(54) **POSITIONSMESSEINRICHTUNG ZUM EINSATZ AN EINER WERKZEUGMASCHINE**
POSITION MEASURING DEVICE FOR USE ON A MACHINE TOOL
DISPOSITIF DE POSITIONNEMENT DESTINÉ À ÊTRE UTILISÉ SUR UNE MACHINE-OUTIL

(30) Priorität: 15.09.2014 DE 102014218483
(43) Veröffentlichungstag der Anmeldung: 16.11.2016
(73) Patentinhaber: DECKEL MAHO Pfronten GmbH, 87459 Pfronten (DE)
(72) Erfinder: JUNG, Robert, 87459 Pfronten (DE); KÖCHL, Roland, 6682 Vils (AT)
(74) Vertreter: MERH-IP Matias Erny Reichl Hoffmann Patentanwälte PartG mbB
(86) Internationale Anmeldenummer: PCT/EP2015/071008
(87) Internationale Veröffentlichungsnummer: WO 2016/041919

(56) Entgegenhaltungen:
- EP-A2- 0 118 607
- EP-A2- 0 416 391
- EP-A2- 2 233 893
- WO-A2-02/27265
- US-A- 5 760 392

## Beschreibung

Die vorliegende Erfindung betrifft eine Positions- bzw. Längenmesseinrichtung zum Einsatz an einer Werkzeugmaschine, insbesondere zur inkrementellen oder bevorzugt absoluten Messung einer Position eines ersten Bauteils relativ zu einem zweiten Bauteil z.B. bei mittels einer numerisch steuerbaren Linearachse relativ zueinander verfahrbaren Bauteilen einer Werkzeugmaschine. Insbesondere betrifft die vorliegende Erfindung eine Befestigungseinrichtung zur Befestigung einer Positions- bzw. Längenmesseinrichtung für den Einsatz an der Werkzeugmaschine.

### Hintergrund der Erfindung

Bei Werkzeugmaschinen, insbesondere numerisch gesteuerten Werkzeugmaschinen ist es bekannt, Bauteile vorzusehen, die mittels einer einen Antrieb umfassenden numerisch steuerbaren Linearachse relativ zu einem anderen Bauteil der Werkzeugmaschine linear verfahrbar sind. Hierbei werden Positionen, die über die Linearachse anzufahren sind, z.B. über Eingaben eines Bedieners an einer Steuerkonsole der Werkzeugmaschine oder über Verfahrbefehle eines Steuerprogramms als Sollpositionen vorgegeben, die in an den Antrieb der Linearachse zu übermittelnde Steuerbefehle umgewandelt werden, um ein erstes Bauteil der Werkzeugmaschine, wie z.B. einen Linearachsschlitten, relativ zu einem zweiten Bauteil, wie z.B. ein Führungen für den Schlitten tragendes Bauteil, anhand der Steuerbefehle zu verfahren.

Um die Genauigkeit der Positionssteuerung zu Verbessern ist es an Werkzeugmaschinen vorgesehen, eine Positions- bzw. Längenmesseinrichtung bereitzustellen, die es erlaubt, eine gegenwärtige Istposition der relativ zueinander verfahrbaren Bauteile relativ zueinander zu messen, z.B. um die Positionssteuerung der Linearachse zu kalibrieren, oder auch um eine Position der Bauteile relativ zueinander direkt zu messen, falls erforderlich, z.B. nach Einschalten der Werkzeugmaschine bzw. der Steuerung der Werkzeugmaschine.

Einerseits ist es möglich, die Position zweier relativ zueinander verfahrbarer Bauteile inkrementell über den bzw. an dem Antrieb der Linearachse zu erfassen. Bevorzugt werden zur inkrementellen aber auch bevorzugt zur absoluten Positionsmessung bzw. zur Bestimmung der Lage zweier relativ zueinander verfahrbarer Bauteile einer Werkzeugmaschine allerdings im Stand der Technik Positionsmesseinrichtungen vorgeschlagen bzw. verwendet, die einen Maßstabsabschnitt bzw. einen Maßstabscodeabschnitt umfassen, der an einem der Bauteile befestigt bzw. aufgebracht ist, und eine Abtasteinrichtung, die auf dem anderen Bauteil befestigt ist, und mit dem Bauteil relativ zu dem den Maßstabsabschnitt bzw. den Maßstabscodeabschnitt aufweisenden Bauteil verfahren wird. Durch Abtasten des Maßstabsabschnitts bzw. des Maßstabscodeabschnitts durch die Abtasteinrichtung kann die Position der Bauteile relativ zueinander bestimmt werden, siehe beispielsweise eine gattungsgemäße Positionsmesseinrichtung gemäß derDE 10 2006 031 756 A1.

Durch Vergleich der mittels der Positionsmesseinrichtung bestimmten Istposition und der in der Steuerung vorgegebenen Sollposition kann die Maschinensteuerung kalibriert und überwacht werden, wodurch die Bearbeitungsgenauigkeit bei der Bearbeitung von Werkstücken an der Werkzeugmaschine signifikant verbessert werden kann. Jedoch ist es bei den heutigen Anforderungen an die Bearbeitungsgenauigkeit stets eine Zielsetzung, die Bearbeitungsgenauigkeit und Kalibrationsmöglichkeiten an der Werkzeugmaschine weiter zu verbessern.

Aus der EP 2 233 893 A2 ist ein linearer Maßstab für das Messen von Verschiebungen bekannt, wobei der Maßstab auf einem mit Schrauben auf einem Grundkörper fixierten Maßstabskörper aufgebracht ist. Dabei sind die Schraubverbindungen des Maßstabskörpers mit dem Grundkörper seitlich des Maßstabs vorgesehen.

Aus der US 5,760,392 A ist ein Maßstab zur Verwendung mit einem Wegmesssensor bekannt, wobei der Maßstab auf einem Maßstabskörper aufgesetzt ist und der Maßstabskörper über Klemmelemente seitlich des Maßstabs auf einer Maßstabsmontagefläche geklemmt wird.

Aus der EP 0 118 607 A2 ist eine gekapselte Messeinrichtung bekannt, wobei ein auf einem Quarzglas aufgebrachter Maßstab mit einer elastischen Klebeschicht an einem Gehäuse abgestützt und mit einer Klemmeinrichtung seitlich des Maßstabs fest auf dem Gehäuse aufgespannt ist.

Aus der EP 0 416 391 A2 ist eine Längen- und Winkelmesseinrichtung bekannt, wobei ein Teilungsträger, auf dem eine Maßstabsteilung aufgebracht ist, durch aus Magneten und Stahlkugeln gebildete Anschläge gegen Drehen und Verschieben gegenüber einem Führungsteil gesichert ist.

Ausgehend von dem vorstehend genannten Stand der Technik ist es eine Aufgabe der vorliegenden Erfindung, eine Positions- bzw. Längenmesseinrichtung zum Einsatz an einer Werkzeugmaschine bereitzustellen, die es ermöglicht, die Bearbeitungsgenauigkeit und die Kalibrationsmöglichkeiten an der Werkzeugmaschine weiter zu verbessern, insbesondere mittels möglichst einfacher, zuverlässiger und kostengünstiger Maßnahmen.

### Zusammenfassung der Erfindung

Zur Lösung der vorstehend genannten Aufgabe wird gemäß der vorliegenden Erfindung eine Positionsmesseinrichtung zum Einsatz an einer Werkzeugmaschine gemäß Anspruch 1 vorgeschlagen. Zudem wird zur Lösung der vorstehend genannten Aufgabe gemäß der vorliegenden Erfindung die Werkzeugmaschine gemäß Anspruch 15 vorgeschlagen. Abhängige Ansprüche und weitere in den folgenden Passagen beschriebene Aspekte betreffen bevorzugte Ausführungsbeispiele der vorliegenden Erfindung.

Gemäß einem ersten Aspekt der vorliegenden Erfindung wird eine Positionsmesseinrichtung zum Einsatz an einer Werkzeugmaschine vorgeschlagen. Die Positionsmesseinrichtung umfasst einen mittels einer Abtasteinrichtung abtastbaren Maßstabsabschnitt (z.B. durch optisches, elektronisches, magnetisches, mechanisches oder opto-elektronisches Abtasten) zum Erfassen einer Position eines ersten Bauteils der Werkzeugmaschine relativ zu einem relativ zu dem ersten Bauteil beweglichen bzw. verfahrbaren zweiten Bauteil der Werkzeugmaschine, insbesondere dann, wenn der Maßstabsabschnitt an dem ersten Bauteil angeordnet ist und/ oder die Abtasteinrichtung an dem zweiten Bauteil angeordnet ist.

Weiterhin umfasst die Positionsmesseinrichtung gemäß diesem Aspekt weiterhin zumindest ein Halteelement, das sich in Richtung des Maßstabs des Maßstabsabschnitts erstreckt, wobei durch das zumindest eine Halteelement als Bestandteil einer indirekten Befestigung der Maßstabsabschnitt an einem Fixpunktabschnitt des ersten Bauteils der Werkzeugmaschine indirekt befestigbar ist, wobei ein Material des zumindest einen Halteelements einen thermischen Ausdehnungskoeffizienten aufweist, der kleiner ist als ein thermischer Ausdehnungskoeffizient eines Materials des ersten Bauteils der Werkzeugmaschine, und wobei das zumindest eine Halteelement an einem Ende in Richtung des Maßstabs an dem Maßstabsabschnitt befestigt ist und an dem anderen Ende in Richtung des Maßstabs an dem Fixpunktabschnitt des ersten Bauteils befestigbar ist, sodass die Position des Maßstabsabschnitts relativ zu dem Fixpunktabschnitt des ersten Bauteils im Falle einer thermischen Ausdehnung des ersten Bauteils im Wesentlichen unverändert bleibt.

Der Erfindung liegt hierbei insbesondere die Idee zugrunde, dass es vorteilhaft, wenn der Maßstabsabschnitt zwar auf dem ersten Bauteil der Werkzeugmaschine angeordnet oder sogar angebracht werden kann, allerdings ist nicht direkt bzw. direkt ortsfest auf dem ersten Bauteil der Werkzeugmaschine befestigt ist, sondern indirekt über zumindest ein Halteelement mit einem thermischen Ausdehnungskoeffizienten, welcher kleiner ist als ein thermischer Ausdehnungskoeffizient eines Materials des ersten Bauteils der Werkzeugmaschine.

Durch derartige Maßnahmen ist vorteilhaft eine Konfiguration bereitgestellt, in der eine etwaige thermische Verformung bzw. thermische Ausdehnung des ersten Bauteils der Werkzeugmaschine sich nicht direkt auf die Form, Position und/oder Orientierung des Maßstabsabschnitts auswirkt, da sich das verformende bzw. ausdehnende erste Bauteil "unter" dem Maßstabsabschnitt wegbewegt bzw. wegbewegen kann bzw. unter dem Maßstabsabschnitt ausdehnen oder verformen kann. Die Positionsmessung durch die Positionsmesseinrichtung kann somit trotz etwaiger thermischer Verformung bzw. Ausdehnung des ersten Bauteils ohne signifikante Temperatureinflüsse genau durchgeführt werden, und insbesondere bei Vermeidung temperaturbedingter Messfehler.

Aufgrund des kleinen Ausdehnungskoeffizienten des Materials des zumindest einen Halteelements, über das der Maßstabsabschnitt indirekt an dem ersten Bauteil befestigbar ist, bleibt die absolute Position des Maßstabsabschnitts quasi unabhängig von einer etwaigen thermischen Verformung bzw. Ausdehnung des ersten Bauteils der Werkzeugmaschine feststehend und temperaturunabhängig, da sich die thermischen Verformung bzw. Ausdehnung des ersten Bauteils aufgrund der fehlenden direkten ortsfesten Befestigung des Maßstabsabschnitts an dem ersten Bauteil nicht auswirkt und das zumindest eine Halteelement keine bzw. eine zumindest signifikant kleiner thermische Verformung bzw. Ausdehnung aufweist.

Folglich kann in Ausführungsbeispielen der Erfindung vorteilhaft eine quasi temperaturabhängige, genaue Positionsmessung ermöglicht werden, die mit einfachen Mitteln eine Kompensation der temperaturbedingten Verformungen bzw. Ausdehnungen der Bauteile der Werkzeugmaschine ermöglicht. Dies ermöglicht mit einfachen Mitteln und kostengünstig eine Verbesserung der Bearbeitungsgenauigkeit der Werkzeugmaschine, ohne zwingend zusätzliche temperatursensorbasierte Korrekturen in der Steuerung bereitstellen zu müssen.

In bevorzugten Ausführungsbeispielen weist das Material des Halteelements bevorzugt zumindest in Richtung des Maßstabs einen thermischen Ausdehnungskoeffizienten auf, der vorzugsweise kleiner ist als der thermische Ausdehnungskoeffizient des Materials des ersten Bauteils der Werkzeugmaschine.

In bevorzugten Ausführungsbeispielen weist das Material des Halteelements einen thermischen Ausdehnungskoeffizienten vorzugsweise kleiner oder gleich 3,0·10⁻⁶ K⁻¹ auf, insbesondere bevorzugt kleiner oder gleich 1,0·10⁻⁶ K⁻¹.

In bevorzugten Ausführungsbeispielen ist das Halteelement vorzugsweise aus faserverstärktem Kunststoff, insbesondere vorzugsweise aus kohlenstofffaserverstärktem Kunststoff, gebildet. So kann mit einfachen Mittel ein leichtes, stabiles und steifes Halteelement mit einem sehr niedrigen thermischen Ausdehnungskoeffizienten bereitgestellt werden.

In bevorzugten Ausführungsbeispielen ist das Halteelement vorzugsweise aus Quarzglas gebildet. So kann mit einfachen Mittel ein leichtes, stabiles und steifes Halteelement mit einem sehr niedrigen thermischen Ausdehnungskoeffizienten bereitgestellt werden.

In bevorzugten Ausführungsbeispielen ist der Maßstabsabschnitt vorzugsweise über nur einen an dem ersten Bauteil anbringbaren Fixpunktabschnitt indirekt befestigbar. Dies hat den Vorteil, dass ein Einfluss der etwaigen thermischen Verformung bzw. Ausdehnung des ersten Bauteils weiter signifikant reduziert werden kann, da der Maßstabsabschnitt über nur einen einzigen an dem ersten Bauteil anbringbaren bzw. angebrachten Fixpunktabschnitt indirekt befestigbar ist, so dass die Position des Maßstabsabschnitts im Wesentlichen relativ zu der Position des Fixpunktabschnitts absolut und temperaturunabhängig ist, unabhängig davon, wie die restlichen Bereiche und Abschnitte des ersten Bauteils thermisch verformt bzw. ausgedehnt werden.

In bevorzugten Ausführungsbeispielen ist der Maßstabsabschnitt vorzugsweise direkt oder indirekt an dem zumindest einen Halteelement befestigt, und vorzugsweise ist das Halteelement über nur einen an dem ersten Bauteil anbringbaren Fixpunktabschnitt an dem ersten Bauteil der Werkzeugmaschine befestigbar. Dies hat den Vorteil, dass ein Einfluss der etwaigen thermischen Verformung bzw. Ausdehnung des ersten Bauteils weiter signifikant reduziert werden kann, da der Maßstabsabschnitt über nur einen einzigen an dem ersten Bauteil anbringbaren bzw. angebrachten Fixpunktabschnitt indirekt befestigbar ist, so dass die Position des Maßstabsabschnitts im Wesentlichen relativ zu der Position des Fixpunktabschnitts absolut und temperaturunabhängig ist, unabhängig davon, wie die restlichen Bereiche und Abschnitte des ersten Bauteils thermisch verformt bzw. ausgedehnt werden.

In bevorzugten Ausführungsbeispielen erstreckt sich das Halteelement vorzugsweise in Richtung des Maßstabs des Maßstabsabschnitts und der Maßstabsabschnitt ist vorzugsweise an dem Halteelement befestigt, wobei das Halteelement vorzugsweise direkt an dem an dem ersten Bauteil anbringbaren Fixpunktabschnitt befestigt ist.

In bevorzugten Ausführungsbeispielen ist das zumindest eine Halteelement ein sich in Richtung des Maßstabs des Maßstabsabschnitts erstreckender Stab aus Quarzglas oder aus einem faserverstärktem Kunststoff, insbesondere aus kohlenstofffaserverstärktem Kunststoff. Vorzugsweise ist ein Ende des Stabs an dem an dem ersten Bauteil anbringbaren Fixpunktabschnitt befestigt und/oder vorzugsweise ist das andere Ende des Stabs über einen zweiten Fixpunktabschnitt an dem Maßstabsabschnitt befestigt.

In bevorzugten Ausführungsbeispielen erstreckt sich das Halteelement in Richtung des Maßstabs des Maßstabsabschnitts und der Maßstabsabschnitt ist vorzugsweise an dem Halteelement befestigt, wobei das Halteelement vorzugsweise indirekt an dem ersten Bauteil befestigbar ist.

In bevorzugten Ausführungsbeispielen ist das Halteelement vorzugsweise an einem zweiten Halteelement befestigt, das vorzugsweise an dem an dem ersten Bauteil anbringbaren Fixpunktabschnitt befestigt ist. Dies hat den Vorteil, dass eine stabile Konstruktion bereitgestellt werden kann, in der ein erstes Halteelement zur Halterung und Stabilisierung des Maßstabsabschnitts bereitgestellt werden kann und ein zweites Halteelement zur Befestigung des ersten Halteelements und/oder des Maßstabsabschnitts an einem Fixpunktabschnitt bereitgestellt werden kann.

In bevorzugten Ausführungsbeispielen erstreckt sich das zweite Halteelement in Richtung des Maßstabs des Maßstabsabschnitts und ist vorzugsweise über nur einen an dem Maßstababschnitt und/oder dem ersten Halteelement angebrachten Fixpunktabschnitt an dem Maßstababschnitt und/oder dem ersten Halteelement befestigt.

In bevorzugten Ausführungsbeispielen ist das zweite Halteelement vorzugsweise ein sich in Richtung des Maßstabs des Maßstabsabschnitts erstreckender Stab aus Quarzglas oder aus einem faserverstärktem Kunststoff, insbesondere aus kohlenstofffaserverstärktem Kunststoff, wobei ein Ende des Stabs vorzugsweise an dem an dem ersten Bauteil anbringbaren Fixpunktabschnitt befestigt und/oder ist das andere Ende des Stabs vorzugsweise über einen zweiten Fixpunktabschnitt an dem ersten Halteelement befestigt.

In bevorzugten Ausführungsbeispielen ist der Maßstabsabschnitt und/oder das zumindest eine Halteelement über ein oder mehrere Lagerelemente an dem ersten Bauteil anbringbar. Dies hat den Vorteil, dass neben der einen indirekten ortsfesten Befestigung über das zumindest eine Halteelement und einen potentiellen einzigen ortsfest an dem ersten Bauteil anbringbaren bzw. befestigbaren Fixpunktabschnitt weitere Lagerungselemente bereitgestellt werden können, die den Maßstabsabschnitt und/oder das Haltelement an dem ersten Bauteil halten bzw. lagern können, so dass die Anbringung am ersten Bauteil verbessert und stabilisiert werden kann, ohne eine weitere ortsfeste Befestigung bereitzustellen.

Beispielsweise können Lagerelemente den Maßstabsabschnitt bzw. das Halteelement an dem ersten Bauteil halten, lagern, anklemmen und/oder anpressen, jedoch ohne eine vollständig feste ortsfeste Befestigung bereitzustellen. Der Vorteil ist, dass an den Lagerelementen eine kleine relative Bewegung des ersten Bauteils relativ zu dem Maßstabsabschnitt und/oder dem Haltelement weiterhin ermöglicht ist, z.B. im Rahmen einer thermischen Ausdehnungsbewegung des ersten Bauteils unter/neben dem Maßstabsabschnitt und/oder dem Haltelement.

In bevorzugten Ausführungsbeispielen umfasst die Positionsmesseinrichtung weiterhin die an dem zweiten Bauteil anbringbare Abtasteinrichtung zum Abtasten des Maßstabsabschnitts zum Erfassen der Position des ersten Bauteils der Werkzeugmaschine relativ zu dem relativ zu dem ersten Bauteil beweglichen zweiten Bauteil der Werkzeugmaschine.

Gemäß einem weiteren Aspekt der vorliegenden Erfindung wird weiterhin eine Werkzeugmaschine vorgeschlagen, mit einem ersten Bauteil, einem zweiten Bauteil, das relativ zu dem ersten Bauteil verfahrbar ist, und einer Positionsmesseinrichtung gemäß einem oder mehreren der vorstehend beschriebenen Aspekte und Ausführungsbeispiele.

Eine bzw. die Abtasteinrichtung der Positionsmesseinrichtung ist bevorzugt an dem zweiten Bauteil angeordnet, der Maßstabsabschnitt der Positionsmesseinrichtung ist bevorzugt an dem ersten Bauteil angeordnet. Erfindungsgemäß ist der Maßstabsabschnitt vorzugsweise über das zumindest eine Halteelement als Bestandteil der indirekten Befestigung indirekt an dem ersten Bauteil der Werkzeugmaschine befestigt, wobei ein Material des zumindest einen Halteelements vorzugsweise einen thermischen Ausdehnungskoeffizienten aufweist, der kleiner ist als ein thermischer Ausdehnungskoeffizient eines Materials des ersten Bauteils der Werkzeugmaschine.

Zusammenfassend werden gemäß der vorliegenden Erfindung Aspekte und Ausführungsbeispiele vorgeschlagen, die es vorteilhaft ermöglichen, eine Positions- bzw. Längenmesseinrichtung zum Einsatz an einer Werkzeugmaschine bzw. eine Werkzeugmaschine bereitzustellen, die die Bearbeitungsgenauigkeit und die Kalibrationsmöglichkeiten an der Werkzeugmaschine weiter zu verbessern vermögen, insbesondere mittels einfacher, zuverlässiger und kostengünstiger Maßnahmen.

### Kurzbeschreibung der Zeichnungen

**Figs. 1A** und **1b** zeigen beispielhafte schematische Darstellungen einer Werkzeugmaschine mit einer Positionsmesseinrichtung gemäß einem Ausführungsbeispiel.
**Fig. 2** zeigt eine beispielhafte schematische Darstellung einer Werkzeugmaschine mit einer Positionsmesseinrichtung gemäß einem weiteren Ausführungsbeispiel.
**Fig. 3** zeigt eine beispielhafte schematische Darstellung einer Werkzeugmaschine mit einer Positionsmesseinrichtung gemäß einem weiteren Ausführungsbeispiel.
**Fig. 4** zeigt eine beispielhafte schematische Darstellung einer Werkzeugmaschine mit einer Positionsmesseinrichtung gemäß einem weiteren Ausführungsbeispiel.
**Fig. 5** zeigt eine beispielhafte schematische Darstellung einer Werkzeugmaschine mit einer Positionsmesseinrichtung gemäß einem weiteren Ausführungsbeispiel.
**Fig. 6** zeigt eine beispielhafte schematische Darstellung einer Werkzeugmaschine mit einer Positionsmesseinrichtung gemäß einem weiteren Ausführungsbeispiel.
**Fig. 7** zeigt eine beispielhafte schematische Darstellung einer Werkzeugmaschine mit einer nicht beanspruchten Positionsmesseinrichtung gemäß einem Beispiel zum Erleichtern des Verständnisses der Erfindung.
**Fig. 8** zeigt eine beispielhafte schematische Darstellung einer Werkzeugmaschine mit einer Positionsmesseinrichtung gemäß einem weiteren Ausführungsbeispiel.
**Figs. 9A** und **9B** zeigen beispielhafte schematische Perspektivdarstellungen von Details einer Werkzeugmaschine mit einer Positionsmesseinrichtung gemäß einem weiteren Ausführungsbeispiel.

### Detaillierte Beschreibung der Zeichnungen und von Ausführungsbeispielen der vorliegenden Erfindung

Im Folgenden werden Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

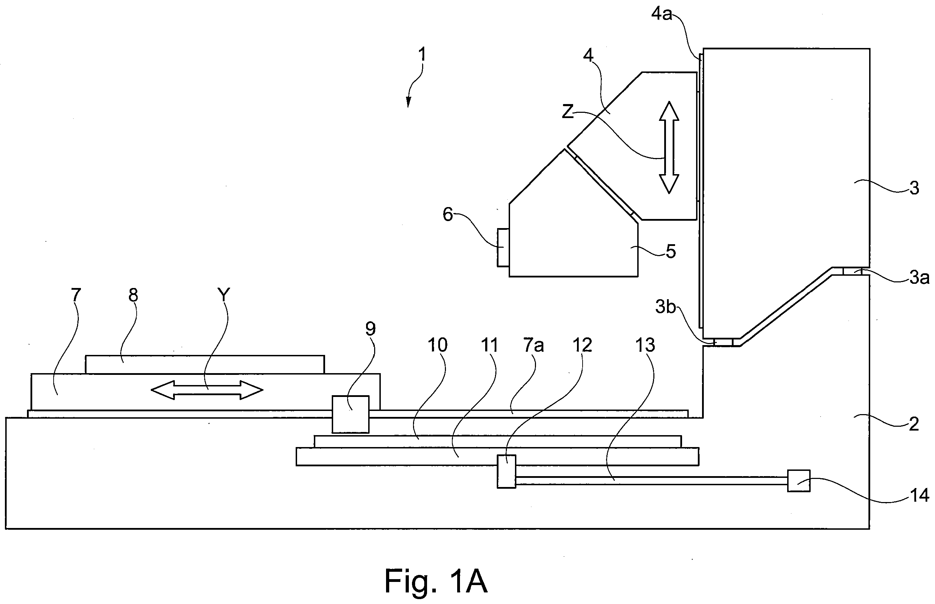

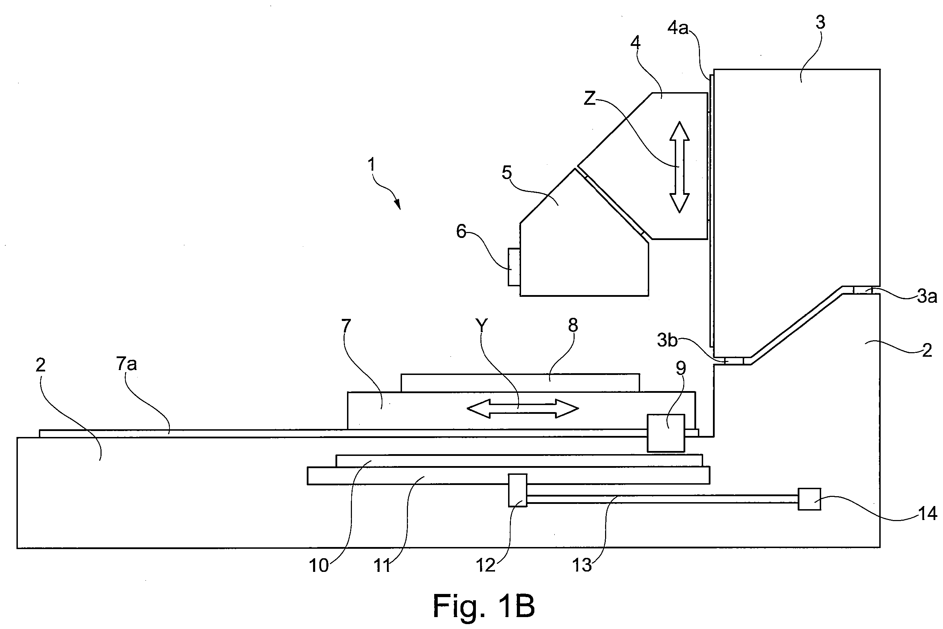

Figs. 1A und 1b zeigen beispielhafte schematische Darstellungen einer Werkzeugmaschine 1 mit einer Positionsmesseinrichtung gemäß einem Ausführungsbeispiel. Die Werkzeugmaschine 1 (z.B. eine numerisch steuerbare 5-Achs-Fräsmaschine, bzw. in weiteren Ausführungsbeispielen auch ggf. eine 5-Achs-Universalfräsmaschine bzw. ein 5-Achs-Bearbeitungszentrum oder auch Drehmaschinen oder Fräs-/Drehmaschinen) weist ein Maschinenbett 2 auf, welches meist aus Stahl oder Gusseisen geformt ist.

Auf einer Seite des Maschinenbetts 2 sind horizontale Führungen 3a und 3b angeordnet, auf denen ein Maschinenständer 3 angeordnet ist, der auf bzw. an den Führungen 3a und 3b mittels einer ersten beispielhaften Linearachse der Werkzeugmaschine in einer horizontalen X-Richtung verfahrbar ist, die beispielhaft senkrecht zur Zeichnungsebene verläuft.

Auf einer Seite des Maschinenständers 3 sind vertikale Führungen 4a angeordnet, an denen ein Schlittenabschnitt 4 eines Spindelkopfs der Werkzeugmaschine angeordnet ist, der auf bzw. an den Führungen 4a mittels einer zweiten beispielhaften Linearachse der Werkzeugmaschine in einer vertikalen Z-Richtung verfahrbar ist.

An dem Schlittenabschnitt 4 des Spindelkopfs ist ein Spindelträgerabschnitt 5 des Spindelkopfs angeordnet, der eine werkzeugtragende Spindel 6 trägt, an der ein Werkzeug aufgenommen und rotatorisch zur Erzeugung einer Zerspanbewegung angetrieben werden kann. In Ausführungsbeispielen kann der Spindelträgerabschnitt 5 des Spindelkopfs relativ zu dem Schlittenabschnitt 4 des Spindelkopfs mittels einer Dreh- bzw. Schwenkachse rotiert bzw. verschwenkt werden.

Auf der Oberseite des Maschinenbetts 2 sind horizontale Führungen 7a angeordnet, auf denen ein Achsschlitten 7 angeordnet ist, der auf bzw. an den Führungen 7a mittels einer dritten beispielhaften Linearachse der Werkzeugmaschine in einer horizontalen Y-Richtung verfahrbar ist. Auf dem Achsschlitten 7 ist beispielhaft ein Rundtisch 8 angeordnet, auf dem Werkstücke bzw. Werkstückeinspannungen angebracht bzw. befestigt werden können. In Ausführungsbeispielen kann der Rundtisch 8 relativ zu dem Achsschlitten 7 mittels einer Dreh- bzw. Schwenkachse rotiert bzw. verschwenkt werden.

Die Werkzeugmaschine 1 weist weiterhin eine Positionsmesseinrichtung gemäß einem Ausführungsbeispiel der Erfindung auf, mit einer Abtasteinrichtung 9 und einem Maßstabsabschnitt 10.

Die Abtasteinrichtung 9 der Positionsmesseinrichtung ist beispielhaft an dem Achsschlitten 7 angebracht bzw. befestigt, derart, dass die Abtasteinrichtung 9 der Positionsmesseinrichtung bei Verfahren des Achsschlittens 7 relativ zu dem Maschinenbett 2 entlang der Führungen 7a in der Y-Achse bzw. der Y-Richtung mit dem Achsschlitten 7 mit bewegt wird bzw. mitfährt. Dies ist in Figs. 1A und 1B erkennbar, wobei Fig. 1A die Werkzeugmaschine 1 beispielhaft in einem Zustand zeigt, in dem der Achsschlitten 7 mit dem Rundtisch 8 und der Abtasteinrichtung 9 der Positionsmesseinrichtung nach links verfahren ist, und wobei Fig. 1B die Werkzeugmaschine 1 beispielhaft in einem Zustand zeigt, in dem der Achsschlitten 7 mit dem Rundtisch 8 und der Abtasteinrichtung 9 der Positionsmesseinrichtung nach rechts verfahren ist.

Der Maßstabsabschnitt 10 ist an dem Maschinenbett 2 angebracht und erstreckt sich parallel zu der Y-Richtung des Achsschlittens 7, derart, dass die an dem Achsschlitten 7 angebrachte Abtasteinrichtung 9 der Positionsmesseinrichtung in jeder Position des Achsschlitten 7 einen gegenüberliegenden Abschnitt des Maßstabsabschnitts 10 abtasten bzw. auslesen kann.

Hierbei kann die Positionsmesseinrichtung als inkrementelle Positionsmesseinrichtung ausgebildet sein, bei der die Abtasteinrichtung 9 nicht die absolute Position an dem Maßstabsabschnitt 10 auslesen kann, sondern bei Entlangfahren des Maßstabsabschnitt 10 inkrementell die Distanz zwischen zwei Punkten an dem Maßstabsabschnitt 10 erfassen kann. Bevorzugt ist die Positionsmesseinrichtung jedoch als absolute Positionsmesseinrichtung ausgebildet, bei der die Abtasteinrichtung 9 dazu eingerichtet ist, an jeder Position des Maßstabsabschnitts 10 eine absolute Position auszulesen. Das Abtasten des Maßstabsabschnitts 10 durch die Abtasteinrichtung 9 erfolgt bevorzugt optisch, elektronisch und/oder opto-elektronisch, jedoch ist es in weiteren Ausführungsbeispielen möglich, mechanische oder mechanische Abtastverfahren anzuwenden.

Im Folgenden wird ein Ausführungsbeispiel eines Befestigungssystems für die Positionsmesseinrichtung beschrieben. Hierbei wird ein erstes Halteelement 11 bereitgestellt, welches sich analog zu dem Maßstabsabschnitt 10 parallel zur Y-Richtung erstreckt und eine Länge aufweist, die gleich oder hier beispielhaft größer ist als die Länge des Maßstabsabschnitts 10.

Beispielhaft ist der Maßstabsabschnitt 10 an dem ersten Halteelement 11 angeordnet und angebracht bzw. befestigt. Beispielhaft ist das Halteelement 11 aus einem Material gebildet, dass einen kleineren thermischen Ausdehnungskoeffizienten als das Material des Maschinenbetts 2 aufweist, insbesondere kleiner oder gleich 3,0·10⁻⁶ K⁻¹, insbesondere bevorzugt kleiner oder gleich 1,0·10⁻⁶ K⁻¹. Bei Materialien mit unterschiedlichen Ausdehnungskoeffizienten in unterschiedliche Richtungen ist das Halteelement 11 aus einem Material gebildet, dass in Richtung der Y-Richtung bzw. in Richtung des Maßstabs des Maßstabsabschnitts 10 einen kleineren thermischen Ausdehnungskoeffizienten als das Material des Maschinenbetts 2 aufweist.

In Ausführungsbeispielen kann das Halteelement 11 als ein Halteelement aus einem faserverstärktem Kunststoff (insbesondere bevorzugt aus einem kohlenstofffaserverstärktem Kunststoff) ausgebildet sein, z.B. als eine längliche Platte einem faserverstärktem Kunststoff (insbesondere bevorzugt aus einem kohlenstofffaserverstärktem Kunststoff). In derartigen Ausführungsbeispielen weist das Halteelement 11 praktisch kein Temperaturverhalten auf, da der thermische Ausdehnungskoeffizient praktisch verschwindend gering ist.

In dem Ausführungsbeispiel gemäß Figs. 1A und 1B ist der Maßstabsabschnitt 10 nicht direkt an dem Maschinenbett 2 befestigt, sondern an dem Halteelement 11. Weiterhin ist das Halteelement 11 beispielhaft ebenfalls nicht direkt an dem Maschinenbett 2 befestigt, sondern über einen Fixpunktabschnitt 12 bzw. ein Fixpunkt-Befestigungselement 12 ab einem zweiten Halteelement 13 befestigt.

Beispielhaft ist das Halteelement 13 aus einem Material gebildet, dass einen kleineren thermischen Ausdehnungskoeffizienten als das Material des Maschinenbetts 2 aufweist, insbesondere kleiner oder gleich 3,0·10⁻⁶ K⁻¹, insbesondere bevorzugt kleiner oder gleich 1,0.10⁻⁶ K⁻¹. Bei Materialien mit unterschiedlichen Ausdehnungskoeffizienten in unterschiedliche Richtungen ist das Halteelement 13 aus einem Material gebildet, dass in Richtung der Y-Richtung bzw. in Richtung des Maßstabs des Maßstabsabschnitts 10 einen kleineren thermischen Ausdehnungskoeffizienten als das Material des Maschinenbetts 2 aufweist.

In Ausführungsbeispielen kann das Halteelement 13 als ein Halteelement aus einem faserverstärktem Kunststoff (insbesondere bevorzugt aus einem kohlenstofffaserverstärktem Kunststoff) ausgebildet sein, z.B. als ein länglicher Haltestab aus einem faserverstärktem Kunststoff (insbesondere bevorzugt aus einem kohlenstofffaserverstärktem Kunststoff). In weiteren Ausführungsbeispielen kann das Halteelement 13 bevorzugt als ein Halteelement aus Quarzglas ausgebildet sein, z.B. als ein länglicher Haltestab aus Quarzglas. In derartigen Ausführungsbeispielen weist das Halteelement 13 praktisch kein Temperaturverhalten auf, da der thermische Ausdehnungskoeffizient praktisch verschwindend gering ist.

Ein Ende des länglichen, sich beispielhaft in der Y-Richtung erstreckenden Halteelements 13 ist über den Fixpunktabschnitt 12 (Befestigungselement) an dem Halteelement 11 ortsfest befestigt (z.B. mittels einer oder mehrerer Schrauben bzw. Nuten, und/oder mittels Klebstoff). Hierbei ist der Fixpunktabschnitt 12 beispielhaft an einem mittleren Abschnitt des Halteelement 11 befestigt.

Das andere Ende des länglichen, sich beispielhaft in der Y-Richtung erstreckenden Halteelements 13 ist über den Fixpunktabschnitt 14 (Befestigungselement) an dem Maschinenbett 2 der Werkzeugmaschine 1 ortsfest befestigt (z.B. mittels einer oder mehrerer Schrauben bzw. Nuten, und/oder mittels Klebstoff).

In diesem Ausführungsbeispiel ist der Maßstabsabschnitt 10 der Positionsmesseinrichtung indirekt an dem Maschinenbett 2 befestigt, indem der Maßstabsabschnitt 10 direkt an dem Halteelement 11 ortsfest befestigt ist (oder ortsfest auf dieses aufgebracht ist), das Halteelement 11 an seinem mittleren Abschnitt über den Fixpunktabschnitt 12 ortsfest an dem einen Ende des Haltelements 12 befestigt ist und das andere Ende des Haltelements 12 über den Fixpunktabschnitt 14 ortsfest an dem Maschinenbett 2 an der Position des Maschinenständers 3 befestigt ist. Der Fixpunktabschnitt 14 bildet somit in dem Befestigungssystem des Maßstabsabschnitts 10 den einzigen Befestigungspunkt der ortsfesten Befestigung an dem Maschinenbett 2 (thermischer Fixpunkt). Somit führt eine thermische Ausdehnung des Maschinenbetts 2 bei höheren Umgebungstemperaturen dazu, dass das Maschinenbett 2 relativ zu dem Befestigungssystem des Maßstabsabschnitts 10 und dem Fixpunktabschnitt 14 nach links in Figs. 1A und 1B unter dem Maßstabsabschnitt 10 ausdehnt, wobei die Position des Maßstabsabschnitts 10 relativ zu dem thermischen Fixpunkt an dem Fixpunktabschnitt 14 im Wesentlichen unverändert bleibt.

Somit kann vorteilhaft eine Positionsmesseinrichtung bereitgestellt werden, bei der ein quasi absolutes und temperaturunabhängiges Maßstabsystem bereitgestellt ist, das trotz und vorteilhaft unabhängig von etwaigen thermischen Ausdehnungen und Verformungen des darunter bzw. daneben liegenden Maschinenbetts 2 genaue Positionsbestimmungen ermöglicht, derart, dass ggf. weitere thermische Kompensationskorrekturen in den Steuerungen z.B. auf Basis von Temperatursensorsignalen nicht mehr erforderlich sind.

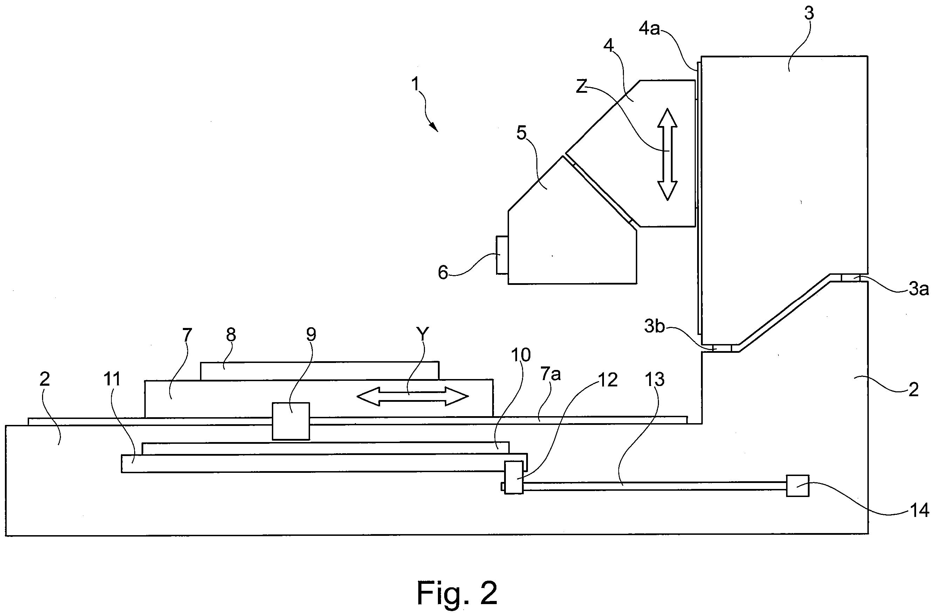

Fig. 2 zeigt eine beispielhafte schematische Darstellung einer Werkzeugmaschine 1 mit einer Positionsmesseinrichtung gemäß einem weiteren Ausführungsbeispiel.

Der Unterschied zwischen dem Ausführungsbeispiel gemäß Fig. 2 im Vergleich zu dem Ausführungsbeispiel gemäß Figs. 1A und 1B ist, dass in Fig. 2 der Fixpunktabschnitt 12, mit dem das eine Ende des Halteelements 13 ortsfest an dem Halteelement 12 befestigt ist, nicht an dem mittleren Abschnitt des Halteelements 12 befestigt ist, sondern an einem Endabschnitt des Halteelements 12.

Bei Materialien für die Halteelemente mit sehr niedrigem Ausdehnungskoeffizienten sind die Temperatureigenschaften bzw. ermöglichten temperaturunabhängigen Positionsmessgenauigkeiten des Ausführungsbeispiels gemäß Fig. 2 genauso gut, wie des Ausführungsbeispiels gemäß Figs. 1A und 1B. Sollte das Halteelement 11 aus einem Material gefertigt sein, das noch einen nicht vernachlässigbaren thermischen Ausdehnungskoeffizienten aufweist, ist das Ausführungsbeispiel gemäß Figs. 1A und 1B zweckmäßiger, da sich etwaige kleine Ausdehnungen auf beiden Seiten des mittig angeordneten Fixpunktelements 12 in Figs. 1A und 1B im Durchschnitt heraus mitteln.

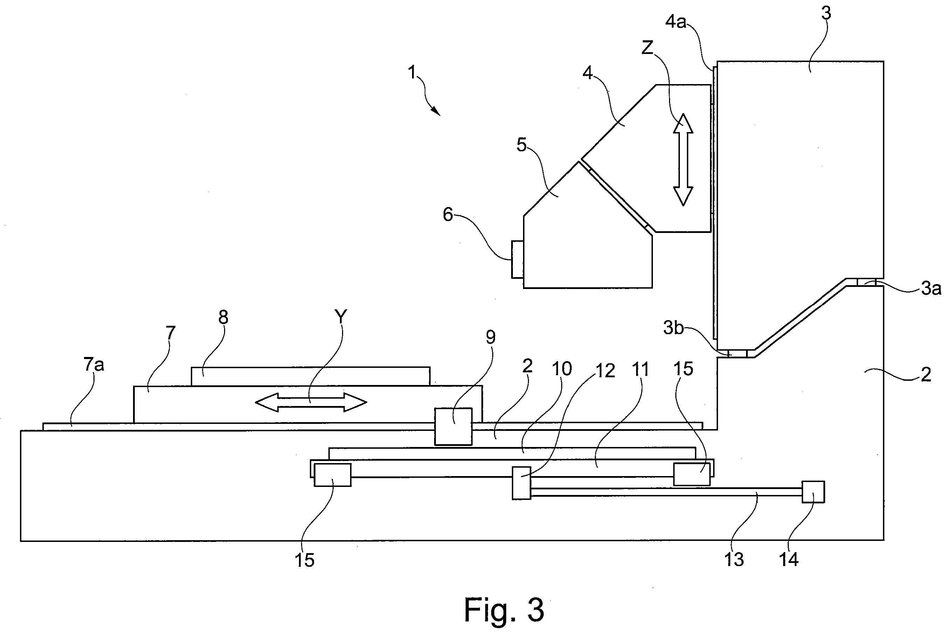

Fig. 3 zeigt eine beispielhafte schematische Darstellung einer Werkzeugmaschine 1 mit einer Positionsmesseinrichtung gemäß einem weiteren Ausführungsbeispiel.

Der Unterschied zwischen dem Ausführungsbeispiel gemäß Fig. 3 im Vergleich zu dem Ausführungsbeispiel gemäß Figs. 1A und 1B ist, dass in Fig. 3 zusätzliche Lagerelemente 15 an Enden des Halteelements 11 angeordnet sind, die das Halteelement 11 halten, andrücken, anpressen, anklemmen und/oder lagern.

Mittels der Lagerelemente 15 kann das Halteelement 11 und/oder der Maßstabsabschnitt 10 an dem Maschinenbett 2 gehalten werden und/oder angebracht werden, in dem Sinne, dass der Maßstabsabschnitt 10 bzw. das Halteelement 11 an dem Maschinenbett 2 angeklemmt, angepresst, angedrückt, und/oder gehalten werden, allerdings eben nicht vollständig ortsfest befestigt sind, so dass eine thermische Ausdehnung des Maschinenbetts 2 unter bzw. neben dem Maßstabsabschnitt 10 ohne Positionsverschiebung bzw. Verformung des Maschinenbetts 2 möglich bleibt.

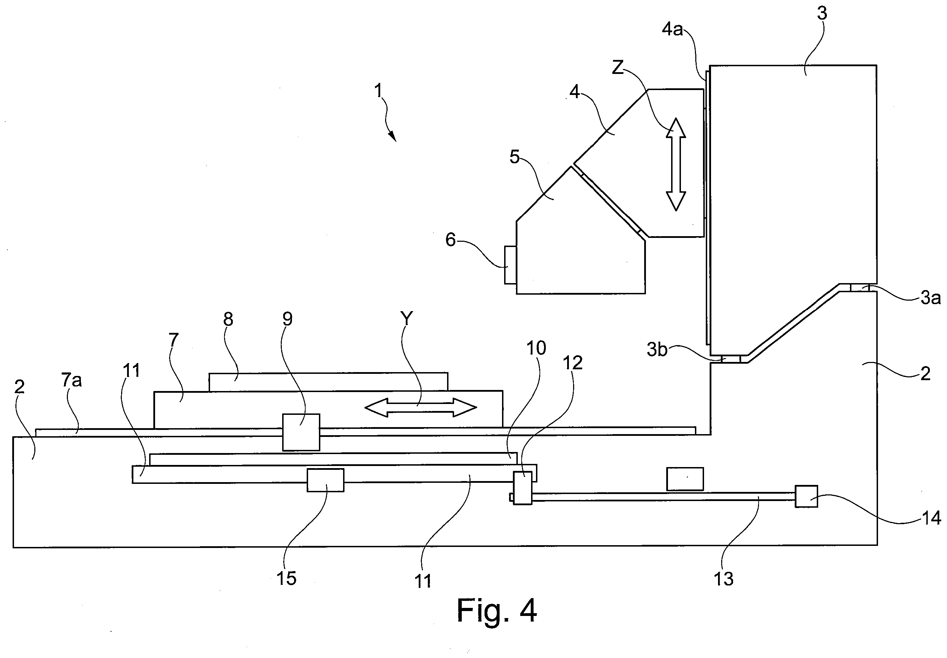

Fig. 4 zeigt eine beispielhafte schematische Darstellung einer Werkzeugmaschine 1 mit einer Positionsmesseinrichtung gemäß einem weiteren Ausführungsbeispiel.

Der Unterschied zwischen dem Ausführungsbeispiel gemäß Fig. 4 im Vergleich zu dem Ausführungsbeispiel gemäß Fig. 2 ist, dass in Fig. 4 ein zusätzliches Lagerelement 15 an einem mittleren Abschnitt des Halteelements 11 angeordnet ist, das das Halteelement 11 hält, andrückt, anpresst, anklemmt und/oder lagert.

Mittels des Lagerelements 15 kann das Halteelement 11 und/oder der Maßstabsabschnitt 10 an dem Maschinenbett 2 gehalten werden und/oder angebracht werden, in dem Sinne, dass der Maßstabsabschnitt 10 bzw. das Halteelement 11 an dem Maschinenbett 2 angeklemmt, angepresst, angedrückt, und/oder gehalten werden, allerdings eben nicht vollständig ortsfest befestigt sind, so dass eine thermische Ausdehnung des Maschinenbetts 2 unter bzw. neben dem Maßstabsabschnitt 10 ohne Positionsverschiebung bzw. Verformung des Maschinenbetts 2 möglich bleibt.

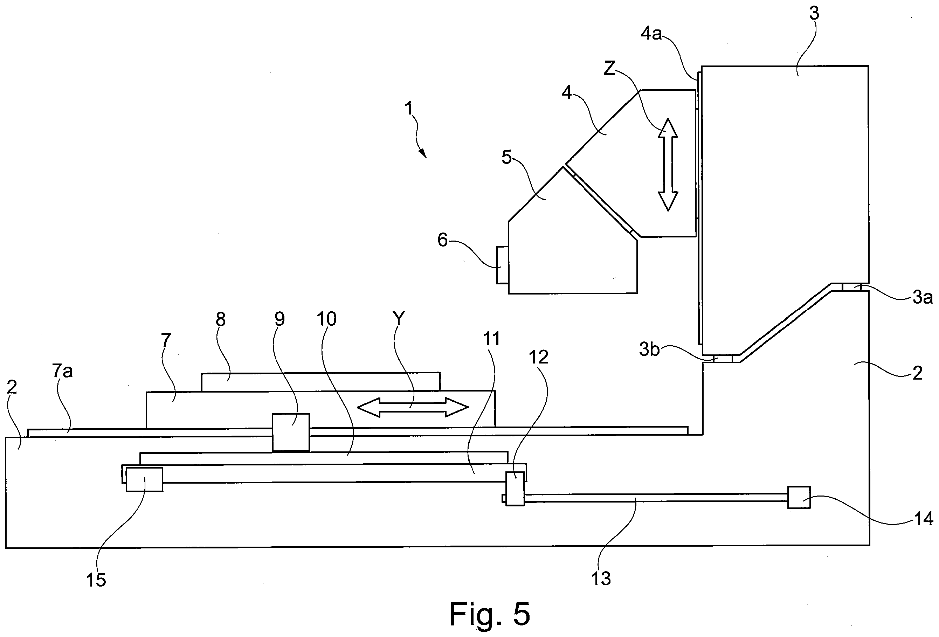

Fig. 5 zeigt eine beispielhafte schematische Darstellung einer Werkzeugmaschine 1 mit einer Positionsmesseinrichtung gemäß einem weiteren Ausführungsbeispiel.

Der Unterschied zwischen dem Ausführungsbeispiel gemäß Fig. 5 im Vergleich zu dem Ausführungsbeispiel gemäß Fig. 2 ist, dass in Fig. 5 ein zusätzliches Lagerelement 15 an dem dem am Halteelement 11 befestigten Fixpunktabschnitt 12 gegenüberliegenden Endabschnitt des Halteelements 11 angeordnet ist, wobei das Lagerelement 15 das Halteelement 11 hält, andrückt, anpresst, anklemmt und/oder lagert.

Mittels des Lagerelements 15 kann das Halteelement 11 und/oder der Maßstabsabschnitt 10 an dem Maschinenbett 2 gehalten werden und/oder angebracht werden, in dem Sinne, dass der Maßstabsabschnitt 10 bzw. das Halteelement 11 an dem Maschinenbett 2 angeklemmt, angepresst, angedrückt, und/oder gehalten werden, allerdings eben nicht vollständig ortsfest befestigt sind, so dass eine thermische Ausdehnung des Maschinenbetts 2 unter bzw. neben dem Maßstabsabschnitt 10 ohne Positionsverschiebung bzw. Verformung des Maschinenbetts 2 möglich bleibt.

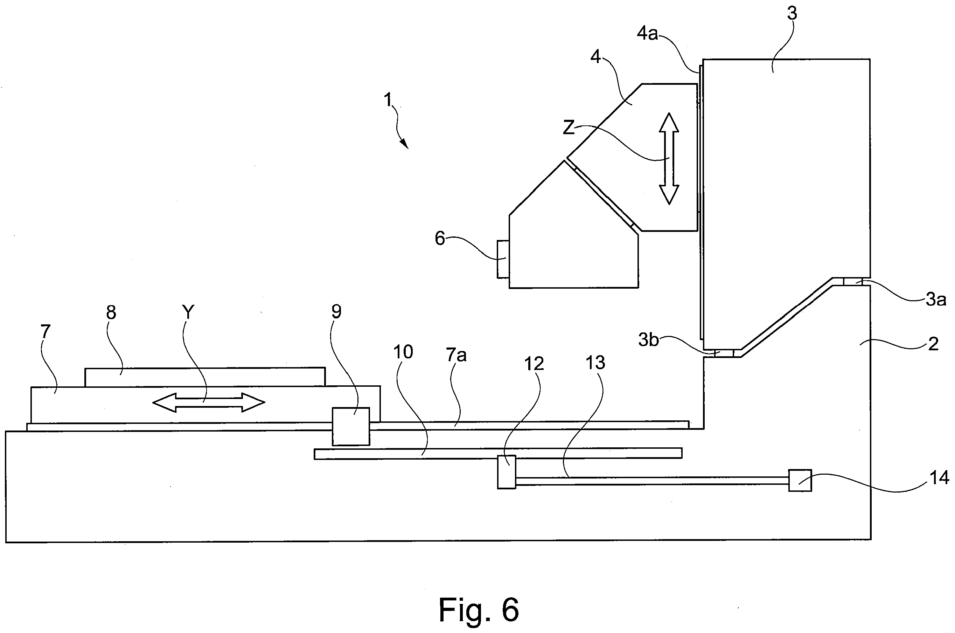

Fig. 6 zeigt eine beispielhafte schematische Darstellung einer Werkzeugmaschine 1 mit einer Positionsmesseinrichtung gemäß einem weiteren Ausführungsbeispiel.

Hierbei handelt es sich um ein vereinfachtes Ausführungsbeispiel im Vergleich zu Figs. 1A und 1B. Der Unterschied zwischen dem Ausführungsbeispiel gemäß Fig. 6 im Vergleich zu dem Ausführungsbeispiel gemäß Figs. 1A und 1B ist, dass in Fig. 6 das Halteelement 11 beispielhaft fehlt und der an dem einen Ende des Haltelements 13 befestigte Fixpunktabschnitt 12 beispielhaft ortsfest direkt an dem Maßstabsabschnitt 10 der Positionsmesseinrichtung befestigt ist.

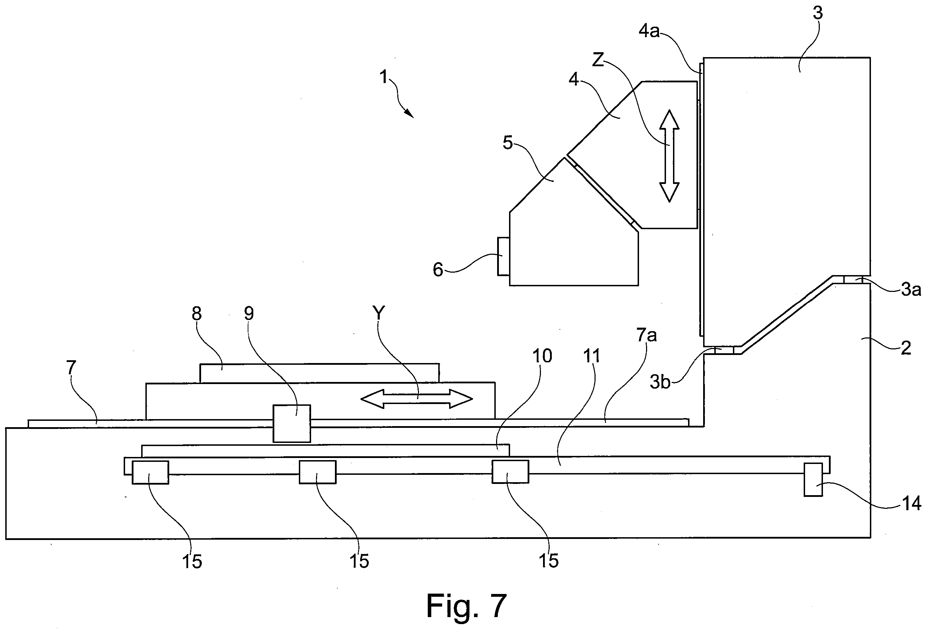

**Fig. 7** zeigt eine beispielhafte schematische Darstellung einer Werkzeugmaschine 1 mit einer nicht beanspruchten Positionsmesseinrichtung gemäß einem Beispiel zum Erleichtern des Verständnisses der Erfindung.

Der Unterschied zwischen dem Beispiel gemäß Fig. 7 im Vergleich zu dem Ausführungsbeispiel gemäß Figs. 1A und 1B ist, dass in Fig. 7 das Halteelement 13 beispielhaft fehlt und ein Ende des Haltelements 11 direkt an dem Fixpunktabschnitt 14 ortsfest befestigt ist, über den das Haltelement 11 beispielhaft ortsfest an dem Maschinenbett 2 befestigt ist.

Weiterhin sind beispielhaft eine Mehrzahl von zusätzlichen Lagerelementen 15 an dem Halteelement 11 angeordnet, wobei die Lagerelemente 15 das Halteelement 11 halten, andrücken, anpressen, anklemmen und/oder lagern.

Mittels der Lagerelemente 15 kann das Halteelement 11 und/oder der Maßstabsabschnitt 10 an dem Maschinenbett 2 gehalten werden und/oder angebracht werden, in dem Sinne, dass der Maßstabsabschnitt 10 bzw. das Halteelement 11 an dem Maschinenbett 2 angeklemmt, angepresst, angedrückt, und/oder gehalten werden, allerdings eben nicht vollständig ortsfest befestigt sind, so dass eine thermische Ausdehnung des Maschinenbetts 2 unter bzw. neben dem Maßstabsabschnitt 10 ohne Positionsverschiebung bzw. Verformung des Maschinenbetts 2 möglich bleibt.

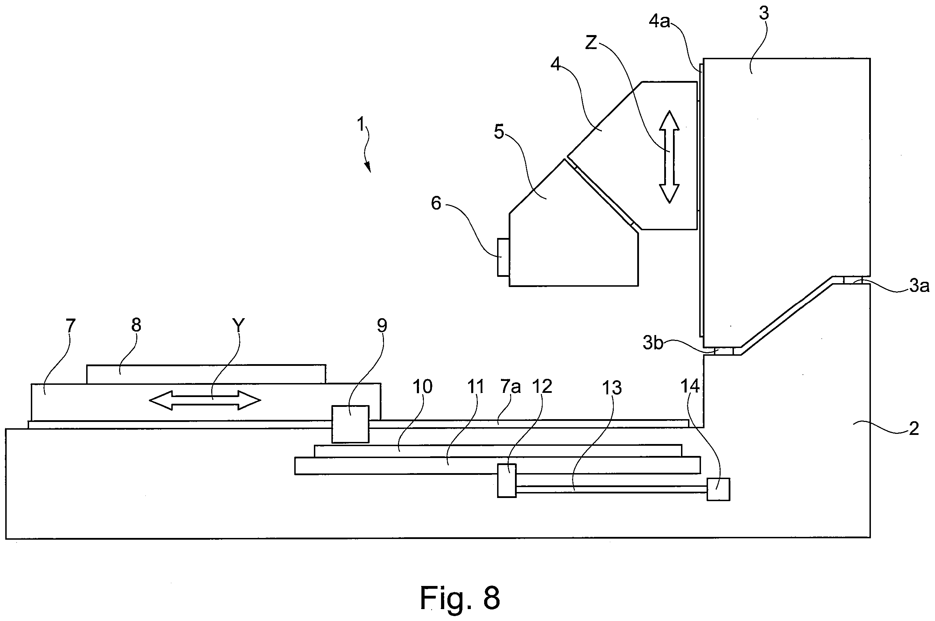

**Fig. 8** zeigt eine beispielhafte schematische Darstellung einer Werkzeugmaschine 1 mit einer Positionsmesseinrichtung gemäß einem weiteren Ausführungsbeispiel.

Der Unterschied zwischen dem Ausführungsbeispiel gemäß Fig. 8 im Vergleich zu dem Ausführungsbeispiel gemäß Figs. 1A und 1B ist, dass in Fig. 8 der Fixpunktabschnitt 14, über den das eine Ende des Halteelements 13 ortsfest an dem Maschinenbett 2 befestigt ist, im Wesentlichen an einer Position angeordnet ist, die im Wesentlichen an bzw. in der Nähe einer Ebene positioniert ist, die von den anderen Linearachsen X und Z aufgespannt wird.

Dies hat den Vorteil, dass der temperaturunabhängige Fixpunkt der Befestigungsaufhängung der Positionsmessungseinrichtung an dem Fixpunktabschnitt 14 im Wesentlichen an einem Koordinatennullpunkt der zu messenden Achse im Verhältnis zu anderen Achsen angeordnet ist.

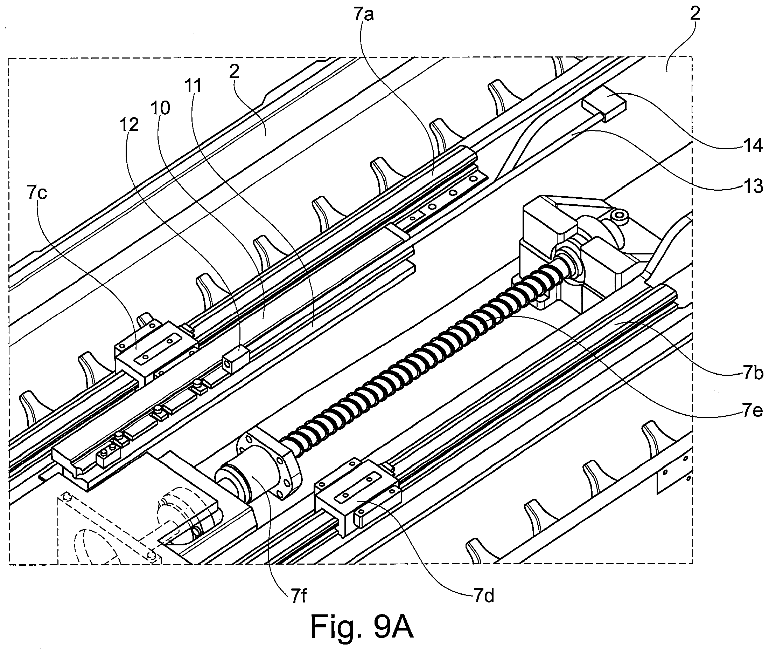

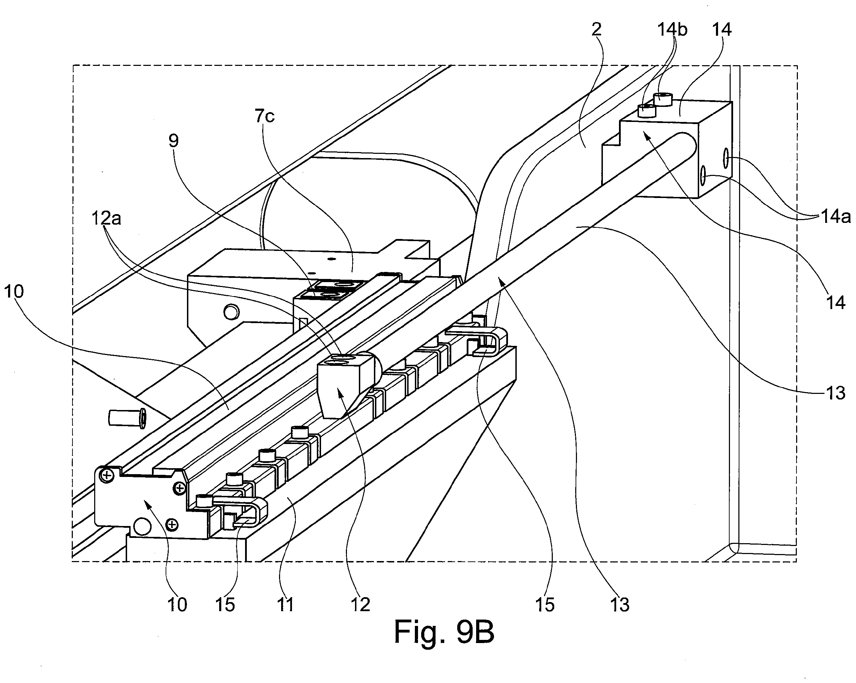

**Figs. 9A** und **9B** zeigen beispielhafte schematische Perspektivdarstellungen von Details einer Werkzeugmaschine 1 mit einer Positionsmesseinrichtung gemäß einem weiteren Ausführungsbeispiel.

An einem Maschinenbett 2 (erstes Bauteil) einer Werkzeugmaschine sind Führungsschienen bzw. Führungen 7a und 7b in einer Y-Richtung angeordnet, die dazu eingerichtet sind, einen nicht gezeigten, auf den Führungselementen bzw. Führungsschlitten 7c und 7d befestigten Schlitten bzw. Maschinentisch (zweites Bauteil) auf den Führungsschienen bzw. Führungen 7a und 7b in der Y-Richtung zu verfahren. Der Schlitten bzw. Maschinentisch (zweites Bauteil) kann mittels eines Antriebs 7f angetrieben werden, der auf einer Schraubenwelle 7e gelagert ist.

An dem Führungselement bzw. Führungsschlitten 7c ist eine Abtasteinrichtung 9 der Positionsmesseinrichtung angebracht, und wird bei Verfahren des Schlittens mit dem Führungselement bzw. Führungsschlitten 7c mit bewegt bzw. mitgefahren. An dem Maschinenbett 2 ist ein in Y-Richtung ausgerichteter Maßstabsabschnitt 10 der Positionsmesseinrichtung angeordnet, wobei die Abtasteinrichtung 9 dazu eingerichtet ist, den Maßstabsabschnitt 10 optisch, elektronisch, opto-elektronisch und/oder magnetisch abzutasten zur Lage- bzw. Positionsbestimmung des Schlittens bzw. des Führungselements bzw. Führungsschlittens 7c relativ zu dem Maschinenbett 2.

An einem maschineständernahen inneren Abschnitt des Maschinenbetts 2 ist ein Fixpunkt-Befestigungselement 14 (Fixpunktabschnitt) an dem Maschinenbett 2 ortsfest befestigt, z.B. mittels Schrauben 14a. An dem Fixpunkt-Befestigungselement 14 (Fixpunktabschnitt) wird ein Ende eines Haltestabs 13 (Halteelement) ortsfest fixiert, z.B. mittels Schrauben 14b. Der Haltestab weist einen thermischen Ausdehnungskoeffizienten auf, der kleiner ist, als der thermische Ausdehnungskoeffizient des Materials des Maschinenbetts 2.

Bevorzugt handelt es sich um einen Haltestab aus faserverstärktem Kunststoff bzw. insbesondere aus kohlefaserverstärktem Kunststoff, oder bevorzugt um einen Haltestab aus Quarzglas.

An dem anderen Ende des Haltestabs 13 ist ein weiteres Fixpunkt-Befestigungselement 12 (Fixpunktabschnitt) ortsfest befestigt, wobei das Fixpunkt-Befestigungselement 12 ortsfest an dem Maßstabsabschnitt 10 befestigt ist.

Der Maßstabsabschnitt 10 lagert auf einem auf dem Maschinenbett 2 angeordneten Halteelement 11 und wird über Lagerelemente 15 an dem Maschinenbett 2 gehalten (allerdings nicht ortsfest befestigt, so dass sich das ggf. sich thermisch verformende Maschinenbett unter dem Maßstabsabschnitt 10 wegbewegen kann).

Bevorzugt handelt es sich bei dem Halteelement 11 um eine längliches Element aus faserverstärktem Kunststoff bzw. insbesondere aus kohlefaserverstärktem Kunststoff, z.B. eine längliche Platte aus faserverstärktem Kunststoff bzw. insbesondere aus kohlefaserverstärktem Kunststoff.

Zusammenfassend werden gemäß der vorliegenden Erfindung Aspekte und Ausführungsbeispiele vorgeschlagen, die es vorteilhaft ermöglichen, eine Positions- bzw. Längenmesseinrichtung zum Einsatz an einer Werkzeugmaschine bzw. eine Werkzeugmaschine bereitzustellen, die die Bearbeitungsgenauigkeit und die Kalibrationsmöglichkeiten an der Werkzeugmaschine weiter zu verbessern vermögen, insbesondere mittels einfacher, zuverlässiger und kostengünstiger Maßnahmen.

## Patentansprüche

1. Positionsmesseinrichtung zum Einsatz an einer Werkzeugmaschine, mit:
- einem mittels einer Abtasteinrichtung (9) abtastbaren Maßstabsabschnitt (10) zum Erfassen einer Position eines ersten Bauteils (2) der Werkzeugmaschine (1) relativ zu einem relativ zu dem ersten Bauteil (2) beweglichen zweiten Bauteil (7) der Werkzeugmaschine (1), wenn der Maßstabsabschnitt (10) an dem ersten Bauteil (2) angeordnet ist und die Abtasteinrichtung (9) an dem zweiten Bauteil (7) angeordnet ist, und
- zumindest einem Halteelement (11; 13), das sich in Richtung des Maßstabs des Maßstabsabschnitts (10) erstreckt, wobei durch das zumindest eine Halteelement (11; 13) als Bestandteil einer indirekten Befestigung der Maßstabsabschnitt (10) an einem Fixpunktabschnitt (14) des ersten Bauteils (2) der Werkzeugmaschine (1) indirekt befestigbar ist,
wobei ein Material des zumindest einen Halteelements (11; 13) einen thermischen Ausdehnungskoeffizienten aufweist, der kleiner ist als ein thermischer Ausdehnungskoeffizient eines Materials des ersten Bauteils (2) der Werkzeugmaschine (1), und
wobei das zumindest eine Halteelement (11; 13) an einem Ende in Richtung des Maßstabs an dem Maßstabsabschnitt (10) befestigt ist und an dem anderen Ende in Richtung des Maßstabs an dem Fixpunktabschnitt (14) des ersten Bauteils (2) befestigbar ist.

2. Positionsmesseinrichtung gemäß Anspruch 1, **dadurch gekennzeichnet, dass**
das Material des Halteelements (11; 13) in Richtung des Maßstabs einen thermischen Ausdehnungskoeffizienten aufweist, der kleiner ist als der thermische Ausdehnungskoeffizient des Materials des ersten Bauteils (2) der Werkzeugmaschine (1).

3. Positionsmesseinrichtung gemäß Anspruch 1 oder 2, **dadurch gekennzeichnet, dass**
das Material des Halteelements (11; 13) einen thermischen Ausdehnungskoeffizienten kleiner oder gleich 3,0 10⁻⁶ K⁻¹ aufweist, insbesondere kleiner odergleich 1,0 10⁻⁶ K⁻¹.

4. Positionsmesseinrichtung gemäß einem der vorstehenden Ansprüche, **dadurch gekennzeichnet, dass**
das Halteelement (11) aus faserverstärktem Kunststoff, insbesondere aus kohlenstofffaserverstärktem Kunststoff, gebildet ist.

5. Positionsmesseinrichtung gemäß einem der Ansprüche 1 bis 4, **dadurch gekennzeichnet, dass**
das Halteelement (13) aus Quarzglas gebildet ist.

6. Positionsmesseinrichtung gemäß einem der vorstehenden Ansprüche, **dadurch gekennzeichnet, dass**
der Maßstabsabschnitt (10) über nur einen an dem ersten Bauteil (2) anbringbaren Fixpunktabschnitt (14) indirekt befestigbar ist.

7. Positionsmesseinrichtung gemäß einem der vorstehenden Ansprüche, **dadurch gekennzeichnet, dass**
der Maßstabsabschnitt (10) direkt oder indirekt an dem Halteelement (11; 13) befestigt ist.

8. Positionsmesseinrichtung gemäß Anspruch 7, **dadurch gekennzeichnet, dass**
das Halteelement (11; 13) direkt an dem an dem ersten Bauteil (2) anbringbaren Fixpunktabschnitt (14) befestigt ist.

9. Positionsmesseinrichtung gemäß Anspruch 8, **dadurch gekennzeichnet, dass**
das Halteelement (13) ein sich in Richtung des Maßstabs des Maßstabsabschnitts (10) erstreckender Stab aus Quarzglas oder aus einem faserverstärktem Kunststoff, insbesondere aus kohlenstofffaserverstärktem Kunststoff, ist,
wobei ein Ende des Stabs (13) an dem an dem ersten Bauteil (2) anbringbaren Fixpunktabschnitt (14) befestigt ist und das andere Ende des Stabs (13) über einen zweiten Fixpunktabschnitt (12) an dem Maßstabsabschnitt (10) befestigt ist.

10. Positionsmesseinrichtung gemäß Anspruch 7, **dadurch gekennzeichnet, dass**
das Halteelement (11) indirekt an dem ersten Bauteil (2) befestigbar ist.

11. Positionsmesseinrichtung gemäß Anspruch 10, **dadurch gekennzeichnet, dass**
das Halteelement (11) an einem zweiten Halteelement (13) befestigt ist, das an dem an dem ersten Bauteil (2) anbringbaren Fixpunktabschnitt (14) befestigt ist, und wobei
das zweite Halteelement (13) sich in Richtung des Maßstabs des Maßstabsabschnitts (10) erstreckt und über nur einen an dem Maßstababschnitt (10) und/ oder dem ersten Halteelement (11) angebrachten Fixpunktabschnitt (12) an dem Maßstababschnitt (10) und/ oder dem ersten Halteelement (11) befestigt ist.

12. Positionsmesseinrichtung gemäß Anspruch 11, **dadurch gekennzeichnet, dass**
das zweite Halteelement (13) ein sich in Richtung des Maßstabs des Maßstabsabschnitts (10) erstreckender Stab aus Quarzglas oder aus einem faserverstärktem Kunststoff, insbesondere aus kohlenstofffaserverstärktem Kunststoff, ist,
wobei ein Ende des Stabs (13) an dem an dem ersten Bauteil (2) anbringbaren Fixpunktabschnitt (14) befestigt ist und das andere Ende des Stabs (13) über einen zweiten Fixpunktabschnitt (12) an dem ersten Halteelement (11) befestigt ist.

13. Positionsmesseinrichtung gemäß einem der vorstehenden Ansprüche, **dadurch gekennzeichnet, dass**
der Maßstabsabschnitt (10) und/ oder das zumindest eine Halteelement (11) über ein oder mehrere Lagerelemente (15) an dem ersten Bauteil (2) anbringbar ist.

14. Positionsmesseinrichtung gemäß einem der vorstehenden Ansprüche, **dadurch gekennzeichnet, dass**
die Positionsmesseinrichtung weiterhin die an dem zweiten Bauteil (7) anbringbare Abtasteinrichtung (9) zum Abtasten des Maßstabsabschnitts (10) zum Erfassen der Position des ersten Bauteils (2) der Werkzeugmaschine (1) relativ zu dem relativ zu dem ersten Bauteil (2) beweglichen zweiten Bauteil (7) der Werkzeugmaschine (1) aufweist.

15. Werkzeugmaschine mit
- einem ersten Bauteil (2),
- einem zweiten Bauteil (7), das relativ zu dem ersten Bauteil (2) verfahrbar ist, und
- einer Positionsmesseinrichtung gemäß einem der vorstehenden Ansprüche.

## Claims

1. A position measurement device for use in a machine tool, comprising:
- a scale section (10) being scannable by means of a scanner (9), for acquiring a position of a first member (2) of said machine tool (1) relative to a second member (7) of said machine tool (1) which is movable relative to said first member (2), when said scale section (10) is arranged on said first member (2) and said scanner (9) is arranged on said second member (7), and
- at least one holding element (11; 13) extending in the direction of the scale of said scale section (10), said scale section (10) being indirectly mountable on a fixed-point section (14) of said first member (2) of said machine tool (1) by said at least one holding element (11; 13) as a component of indirect mounting,
a material of said at least one holding element (11; 13) having a thermal expansion coefficient lower than a thermal expansion coefficient of a material of said first member (2) of said machine tool (1), and
said at least one holding element (11; 13) being mounted on one end in the direction of the scale at said scale section (10) and being mountable on the other end in the direction of the scale at said fixed-point section (14) of said first member (2).

2. The position measurement device according to claim 1, **characterized in that**
the material of said holding element (11; 13) in the direction of the scale has a thermal expansion coefficient lower than the thermal expansion coefficient of the material of said first member (2) of said machine tool (1).

3. The position measurement device according to claim 1 or 2, **characterized in that**
the material of said holding element (11; 13) has a thermal expansion coefficient lower than or equal to 3,0·10⁻⁶ K⁻¹, especially lower than or equal to 1,0·10⁻⁶ K⁻¹.

4. The position measurement device according to one of the preceding claims, **characterized in that**
said holding element (11) is formed of fiber reinforced plastic material, especially of carbon-fiber reinforced plastic material.

5. The position measurement device according to one of the claims 1 to 4, **characterized in that**
said holding element (13) is formed of quartz glass.

6. The position measurement device according to one of the preceding claims, **characterized in that**
said scale section (10) is mountable indirectly through only one fixed-point section (14) attachable to said first member (2).

7. The position measurement device according to one of the preceding claims, **characterized in that**
said scale section (10) is mounted directly or indirectly on said holding element (11; 13).

8. The position measurement device according to claim 7, **characterized in that**
said holding element (11; 13) is mounted directly on said fixed-point section (14) attachable to said first member (2).

9. The position measurement device according to claim 8, **characterized in that**
said holding element (13) is a rod of quartz glass or of a fiber reinforced plastic material, especially of carbon-fiber reinforced plastic material, extending in the direction of the scale of said scale section (10),
an end of said rod (13) being mounted on said fixed-point section (14) attachable to said first member (2) and the other end of said rod (13) is mounted on said scale section (10) through a second fixed-point section (12).

10. The position measurement device according to claim 7, **characterized in that**
said holding element (11) is mountable indirectly on said first member (2).

11. The position measurement device according to claim 10, **characterized in that**
said holding element (11) is mounted at a second holding element (13) mounted on said fixed-point section (14) attachable to said first member (2), and
said second holding element (13) extending in the direction of the scale of said scale section (10) and being mounted on said scale section (10) and/or said first holding element (11) through only one fixed-point section (12) attached to said scale section (10) and/or said first holding element (11).

12. The position measurement device according to claim 11, **characterized in that**
said second holding element (13) is a rod of quartz glass or of a fiber reinforced plastic material, especially of carbon-fiber reinforced plastic material, extending in the direction of the scale of said scale section (10),
an end of said rod (13) being mounted on said fixed-point section (14) attachable to said first member (2) and the other end of said rod (13) being mounted on said first holding element (11) through a second fixed-point section (12).

13. The position measurement device according to one of the preceding claims, **characterized in that**
said scale section (10) and/or said at least one holding element (11) are mountable on said first member (2) through one or more bearing elements (15).

14. The position measurement device according to one of the preceding claims, **characterized in that**
said position measurement device further comprises said scanner (9) attachable to said second member (7), for scanning said scale section (10) to acquire the position of said first member (2) of said machine tool (1) relative to said second member (7) of said machine tool (1) which is movable relative to said first member (2).

15. A machine tool, comprising
- a first member (2),
- a second member (7), movable relative to said first member (2), and
- a position measurement device according to one of the preceding claims.

## Revendications

1. Dispositif de mesure de position destiné à être utilisé sur une machine-outil, avec :
- une section de graduation (10) pouvant être balayée au moyen d'un dispositif de balayage (9) pour détecter une position d'un premier composant (2) de la machine-outil (1) relativement à un second composant (7) de la machine-outil (1) déplaçable par rapport au premier composant (2), lorsque la section de graduation (10) est agencée sur le premier composant (2) et le dispositif de balayage (9) est agencé sur le second composant (7), et
- au moins un élément de retenue (11 ; 13) qui s'étend dans la direction de la graduation de la section de graduation (10), dans lequel, via le au moins un élément de retenue (11 ; 13) en tant que partie d'une fixation indirecte, la section de graduation (10) peut être indirectement fixée sur une section de point de repère (14) du premier composant (2) de la machine-outil (1),
dans lequel un matériau du au moins un élément de retenue (11 ; 13) présente un coefficient de dilatation thermique qui est inférieur à un coefficient de dilatation thermique d'un matériau du premier composant (2) de la machine-outil (1), et
dans lequel le au moins un élément de retenue (11 ; 13) est fixé, à une extrémité dans la direction de la graduation, sur la section de graduation (10) et peut être fixé, à l'autre extrémité dans la direction de la graduation, sur la section de point de repère (14) du premier composant (2).

2. Dispositif de mesure de position selon la revendication 1, **caractérisé en ce que**
le matériau de l'élément de retenue (11; 13) présente, dans la direction de la graduation, un coefficient de dilatation thermique qui est inférieur au coefficient de dilatation thermique du matériau du premier composant (2) de la machine-outil (1).

3. Dispositif de mesure de position selon la revendication 1 ou 2, **caractérisé en ce que**
le matériau de l'élément de retenue (11 ; 13) présente un coefficient de dilatation thermique inférieur ou égal à 3,0 10⁻⁶ K⁻¹, en particulier inférieur ou égal à 1,0 10⁻⁶ K⁻¹.

4. Dispositif de mesure de position selon l'une des revendications précédentes, **caractérisé en ce que**
l'élément de retenue (11) est formé dans une matière plastique renforcée de fibres, en particulier dans une matière plastique renforcée de fibres de carbone.

5. Dispositif de mesure de position selon l'une des revendications 1 à 4, **caractérisé en ce que**
l'élément de retenue (13) est formé dans un verre quartzeux.

6. Dispositif de mesure de position selon l'une des revendications précédentes, **caractérisé en ce que**
la section de graduation (10) peut être indirectement fixée via uniquement une section de point de repère (14) pouvant être montée sur le premier composant (2).

7. Dispositif de mesure de position selon l'une des revendications précédentes, **caractérisé en ce que**
la section de graduation (10) est directement ou indirectement fixée sur l'élément de retenue (11 ; 13).

8. Dispositif de mesure de position selon la revendication 7, **caractérisé en ce que**
l'élément de retenue (11 ; 13) est directement fixé sur la section de point de repère (14) pouvant être montée sur le premier composant (2).

9. Dispositif de mesure de position selon la revendication 8, **caractérisé en ce que**
l'élément de retenue (13) est une barre s'étendant dans la direction de la graduation de la section de graduation (10), en verre quartzeux ou dans une matière plastique renforcée de fibres, en particulier dans une matière plastique renforcée de fibres de carbone,
dans lequel une extrémité de la barre (13) est fixée sur la section de point de repère (14) pouvant être montée sur le premier composant (2) et l'autre extrémité de la barre (13) est fixée sur la section de graduation (10) via une seconde section de point de repère (12).

10. Dispositif de mesure de position selon la revendication 7, **caractérisé en ce que**
l'élément de retenue (11) peut être indirectement fixé sur le premier composant (2).

11. Dispositif de mesure de position selon la revendication 10, **caractérisé en ce que**
l'élément de retenue (11) est fixé sur un second élément de retenue (13) qui est fixé sur la section de point de repère (14) pouvant être montée sur le premier composant (2), et dans lequel
le second élément de retenue (13) s'étend dans la direction de la graduation de la section de graduation (10) et est fixé sur la section de graduation (10) et/ou le premier élément de retenue (11) via uniquement une section de point de repère (12) montée sur la section de graduation (10) et/ou le premier élément de retenue (11).

12. Dispositif de mesure de position selon la revendication 11, **caractérisé en ce que**
le second élément de retenue (13) est une barre s'étendant dans la direction de la graduation de la section de graduation (10), en verre quartzeux ou dans une matière plastique renforcée de fibres, en particulier dans une matière plastique renforcée de fibres de carbone,
dans lequel une extrémité de la barre (13) est fixée sur la section de point de repère (14) pouvant être montée sur le premier composant (2) et l'autre extrémité de la barre (13) est fixée sur le premier élément de retenue (11) via une seconde section de point de repère (12).

13. Dispositif de mesure de position selon l'une des revendications précédentes, **caractérisé en ce que**
la section de graduation (10) et/ou le au moins un élément de retenue (11) peut être monté sur le premier composant (2) via un ou plusieurs éléments de palier (15).

14. Dispositif de mesure de position selon l'une des revendications précédentes, **caractérisé en ce que**
le dispositif de mesure de position présente en outre le dispositif de balayage (9) pouvant être monté sur le second composant (7) pour balayer la section de graduation (10) afin de détecter la position du premier composant (2) de la machine-outil (1) relativement au second composant (7) de la machine-outil (1) déplaçable par rapport au premier composant (2).

15. Machine-outil avec
- un premier composant (2),
- un second composant (7) qui peut être déplacé relativement au premier composant (2), et
- un dispositif de mesure de position selon l'une des revendications précédentes.
